# EUROPÄISCHE PATENTSCHRIFT

(11) **EP 3 421 783 B1**
(45) Veröffentlichungstag und Bekanntmachung des Hinweises auf die Patenterteilung: **18.12.2024**
(21) Anmeldenummer: 18180274.5
(22) Anmeldetag: 28.06.2018
(51) Int. Cl.: F03D 1/06

(54) **AERODYNAMISCHE STRUKTUR**
AERODYNAMIC STRUCTURE
STRUCTURE AÉRODYNAMIQUE

(30) Priorität: 28.06.2017 DE 102017114414
(43) Veröffentlichungstag der Anmeldung: 02.01.2019
(73) Patentinhaber: Hochschule Rhein-Waal, 47533 Kleve (DE)
(72) Erfinder: Gebel, Joachim, 47533 Kleve (DE)
(74) Vertreter: IPrime Bonnekamp Sparing Patentanwaltsgesellschaft mbH

(56) Entgegenhaltungen:
- EP-A2- 2 028 366
- WO-A1-2016/019466
- CN-A- 101 042 147
- CN-Y- 2 818 834
- MX-A- 2011 013 994
- US-A- 4 693 673
- US-A1- 2008 253 896
- US-A1- 2017 174 318
- US-B1- 6 352 408

## Beschreibung

Die Erfindung betrifft eine aerodynamische Struktur, umfassend mindestens eine flügelartige Form mit Ober- und Unterseite, die eine Rotationsachse aufweist, in die ein Lager eingelassen und das über eine Welle mit einer Achse verbunden ist, wobei sich von der Wurzel der flügelartigen Form bis zur Spitze eine ebene Fläche aufspannt und eine Verdickung im Bereich der Profilnase auf der dem Wind abgewandten Oberseite vorhanden ist, wobei die ebene Fläche die Geometrie eines allgemeinen Vierecks von der Wurzel der Form aufweist und an eine der Seiten sich eine dreieckige Geometrie zur Spitze der Form anschließt.

Die Konstruktion von Rotorblättern hat in den letzten Jahren ein breites Anwendungsfeld gefunden, sei es im Bereich der Stromerzeugung in Windturbinen oder im Bereich von Hubschraubern oder Turboladern. Die Konstruktionen haben gemeinsam, dass sie Rotorblätter aufweisen mit deren Hilfe die Strömungsenergie eines Gasgemisches in mechanische Energie umgewandelt werden kann.

So werden Windturbinen bereits seit längerer Zeit zur Stromerzeugung genutzt, wobei die Form und die Gestaltung der Komponenten wie Gondel, Rotorblätter und Turm Gegenstand vieler Untersuchungen gewesen ist. Die Rotorblätter sind nach dem Stand der Technik derart profiliert, dass eine Druckdifferenz zwischen Ober- und Unterseite der Rotorblätter erzeugt und in der Folge die Windturbine in Rotation versetzt wird.

Bei Hubschrauberflügeln wird die Rotation durch einen Motor erzeugt, wobei an den Flügeln ebenfalls ein Druckunterschied zwischen Ober- und Unterseite herrscht, was letztlich dazu führt, dass der Hubschrauber nach oben "gehoben" oder besser nach oben "gedrückt" wird.

Die konstruktive Ausgestaltung von Rotorblättern ist im Stand der Technik bereits eingehend beschrieben worden und orientiert sich immer mehr an den Vorlagen der Natur. Der Stand der Technik beschreibt zahlreiche strömungsbeeinflussende Maßnahmen zur Erzeugung von Auftrieb und zur weiteren Beherrschung der sich ergebenden Strömung. So ist ein bionischer Ansatz aufgrund einer Walflosse in der DE 10 2011 056 342 A1 offenbart.

In der AT 137 005 B ist eine Treibschraubenkonstruktion beschrieben, die aus löffelartigen, Vogelflügeln nachahmenden Flügeln besteht, wobei das von der Vorderkante bis mindestens zur Längsmittellinie reichende Flügelvorderteil als Flachkeil gegen das Außenende und wobei der sich daran anschließende Flügelhinterteil in Form einer längs- und quergewölbten Löffellängshälfte mit die Hinterkante bildenden Längsrand gebildet ist.

Die DE 103 00 284 A1 offenbart ein Rotorblatt für eine Windenergieanlage, mit einem eine Rotorblattvorderkante und eine Rotorblatthinterkante aufweisenden aerodynamischen Profil, wobei die Rotorblattspitze in ihrem Endbereich in Richtung der Druckseite des Rotorblattes abgebogen oder abgewinkelt ist. Ferner sind in der DE 103 002 84 Merkmale verschiedenförm iger Wölbungen und Richtungen in Erstreckungsrichtung eines Rotorblatts in der Längsachse beschrieben, ebenso wie verschiedenförmige geometrische Ausführungen der Blattspitze.

Ferner ist in der CN 28 188 34 Y ein Windkraftgenerator beschrieben, der mit einem Windzylinder und einer Verstärkungsstange in den Windblättern ausgestaltet ist. Die Verstärkungsstange des Windkraftgenerators stellt dabei ein kreisförmiges oder quadratisches Hohlrohrelement aus nichtmagnetischem Material dar, in dem Metallblöcke als Zentrierungselement geleiten, wobei die Verstärkungsstange auf jeder leeseitigen-Oberfläche eines Windblatts angeordnet ist. Es ist jedoch festzustellen, dass die Windblätter nicht eben, sondern eine Faltung auf einer Seite der Oberfläche aufweisen und das kreisförmige oder quadratische Hohlelement leeseitig zur Drehrichtung angeordnet ist. Es ist somit keine Windkante vorhanden und es wird kein Wirbel auf der Oberfläche der Windblätter erzeugt.

Die US 2008/0253896 A1 offenbart seitliche Ablenkelemente für Lüfterflügel, die eine Gegenströmung minimieren und das Auftreten von Spitzenwirbel und turbulenten Strömungsbedingungen verhindern sollen. So werden Wirbel bei der Rotation von Lüfterflügeln ohne Ablenkelemente erzeugt, die den Volumenstrom verringern. Wirbel, die durch die rotierenden Lüfterflügel ohne Ablenkelemente erzeugt werden, unterbrechen den axialen Volumenstrom, wodurch der Wirkungsgrad eines herkömmlichen Lüfters ohne Ablenkelemente schlechter wird.

Die US 4,693,673 B1 offenbart ein Gebläse oder einen Lüfter, die Luft nach oben oder nach unten in einem Raum ansaugen und die Luft radial nach außen streuen, um eine größere Luftzirkulation zu erzeugen. Dabei sind an dem Gebläse oder Lüfter Lüfterflügel angeordnet, wobei die Flügel gegenüber der Rotationsachse einen bestimmten Winkel einschließen. Bei der Drehung der Flügel zur Erzeugung eines axialen Luftstroms, bewirken die Flügel einen radialen Luftstrom, der sich seitlich und nach außen von den oberen Flächen der Flügel wegbewegt.

Die MX 2011 013 994 A offenbart ein Windrad mit einer Rotorkonfiguration in einer Vertikalachse, die aus 3 Blättern mit flachem Flügelprofil besteht. Diese sind durch eine Rotorscheibe verbunden und gebogen, wodurch eine nominale erhöhte Winkelgeschwindigkeit bei geringen Windgeschwindigkeit erzielt werden kann. Es wird beschrieben, dass die Ausgestaltung der Rotorblätter dergestalt ist, dass trotz eines möglichen Strömungsabrisses, der Drehmoment der Konfiguration ausreichend ist, die Rotation fortgesetzt ausführen zu können.

Die US2017/174318 A1 beschreibt Geräuschreduktionsmittel für Propeller von Luftahrzeugen im Betrieb, wobei die Geräuschreduktionsmittel an den Propellern angeordnet werden können und die Luftbewegung entlang der Propeller verändern. Durch die Veränderungen des Luftstroms an und zwischen den Propeller verringert sich der Luftstrom entlang des Propellers und in der Folge sinkt die Lärmbelastung für die Umgebung. Dabei können insbesondere lateral an den Propellerblättern aufblasbare Luftkammern angeordnet werden, um die Luftzirkulation zu verändern.

Schließlich ist aus der WO2018/046061 A1 eine Konstruktionseinheit an einem Windkraftrad bekannt, die an/auf der Nabe bzw. der Rotationsachse der Windradflügel angeordnet ist und dafür sorgt, dass Luft, die auf den Bereich der Rotationsachse trifft nach außen in Richtung der Windradflügel abgeleitet wird. Um die Windkraft optimal nutzen zu können sind im mittleren Bereich an den Kanten der Windradflügel winddurchlässige Verdickungen vorgesehen, in denen sich der Wind verfangen kann und als zusätzlicher Impuls für die Rotationsbewegung zur Verfügung steht.

Das Problem bei der Konstruktion von Rotorblättern nach dem Stand der Technik ist jedoch, dass neben den Kosten für die Herstellung der Rotorblätter die bestehenden Anlagen lediglich einen Wirkungsgrad von 40-50% ermöglichen, wobei der Grund dafür hauptsächlich durch aerodynamische Verluste wie Luftreibung an den Blättern, Wirbelschleppen an den Blattspitzen und durch Drall im Nachlauf des Rotors hervorgerufen wird. Um den Wirkungsgrad von Windturbinen, Abgasturboladern und Hubschraubern durch Änderungen der Rotorgeometrie zu verbessern, muss die Konstruktion daher so ausgestaltet werden, dass der durch die Rotoren induzierte Auftrieb verbessert wird oder die aerodynamischen Verluste verringert werden.

Aufgabe der Erfindung ist es daher Rotorblätter für Turbinen, Abgasturbolader und Hubschrauber bereit zu stellen, die kostengünstiger in der Herstellung sind und dabei einen höheren Wirkungsgrad der Anlagen ermöglichen als mit den bereits bekannten Formen, wobei die Formen mit bestehenden Anlagen kompatibel sein sollen.

Die Aufgabe wird erfindungsgemäß durch eine aerodynamische Struktur mit den Merkmalen des unabhängigen Anspruchs 1 gelöst.

Erfindungsgemäß ist vorgesehen eine aerodynamische Struktur bereit zu stellen, die mindestens eine flügelartige Form mit Ober- und Unterseite mit einer Rotationsachse aufweist, wobei in die Rotationsachse ein Lager eingelassen ist, das über eine Welle mit einer Achse verbunden ist, wobei sich von der Wurzel der flügelartigen Form bis zur Spitze eine ebene Fläche aufspannt.

Unter aerodynamischer Struktur soll vorliegend eine geometrische Form zu verstehen sein, die als flügelartige Form in gas- und luftbasierten Konstruktionen als Teil eines Rotors Anwendung findet, wobei die Strömungsenergie eines Gasmediums zur Energieerzeugung im nahezu optimalen Bereich des Betz-Koeffizienten genutzt werden kann.

Die erfindungsgemäße Konstruktion sieht vor, dass die flügelartige Form eine Profilnase mit einer Verdickung auf der dem Gas und/oder Wind abgewandten Oberseite aufweist und eine Geometrie eines allgemeinen Vierecks ausgehend von der Wurzel der Form umfasst, wobei sich eine dreieckige Geometrie an eine der Seiten des Vierecks zur Spitze der Form anschließt. Es ist in der Regel vorgesehen, dass die dreieckige Geometrie sich an die Seite des Vierecks anschließt, die der Wurzel der Form gegenüber liegt. Es ist jedoch auch möglich, dass sich die dreieckige Geometrie der Seite anschließt, die zur Wurzel der Form direkt benachbart liegt. Es hat sich aber gezeigt, dass die Wahl des Typs, bei der sich die dreieckige Geometrie der gegenüberliegenden Seite der Wurzel der Form anschließt, bei einer Rotation der Struktur um die Rotationsachse den größten permanenten Unterdruck auf der Oberseite der flügelartigen Form generiert. Insofern orientiert sich die erfindungsgemäße Form in der Regel an dieser Ausgestaltung, wenn nicht besondere Ausgestaltungen der Struktur mit im Ergebnis verringertem Auftrieb resultieren sollen.

Wird die Struktur durch eine Windbewegung in Rotation versetzt, so entsteht ein Wirbel oder eine wirbelartige Gas- oder Luftbewegung auf der Oberseite der Form, d.h. auf der ebenen Fläche. Der Wirbel breitet sich in der Folge auf der ebenen Fläche aus und reißt Luft auf der Oberfläche mit. Es wurde in diesem Zusammenhang festgestellt, dass je vollständiger sich der Wirbel oder die wirbelartige Gas- oder Luftbewegung auf der Oberfläche der ebenen Fläche ausbreitet, der generierte Unterdruck wächst und der so erzeugte Auftrieb größer wird.

An der dem Wind abgewandten Oberseite der Form ist erfindungsgemäß vorgesehen, dass eine Verdickung vorhanden ist, die scharfkantig ausgestaltet ist und insbesondere viereckig oder dreieckig ist. Eine scharfkantige Ausgestaltung bedeutet in diesem Zusammenhang, dass ein Übergang von der scharfkantigen Verdickung zur Oberfläche der ebenen Fläche so gewählt wird, dass ein Strömungsabbruch auf der dem Wind abgewandten Seite generiert wird, d.h. eine Windkante entsteht. Die Höhe der Verdickung gegenüber der ebenen Fläche beträgt dabei mindestens das Doppelte der Dicke der ebenen Fläche. In einer besonders vorteilhaften Ausgestaltung ist dabei insbesondere vorgesehen, dass die Geometrie der Verdickung der gesamten Kontur der dem Wind abgewandten Seite der Form folgt, d.h. dass die Kontur der Verdickung sich über die gesamte Spannweite der Form erstreckt und damit entlang der gesamten Kontur des allgemeinen Vierecks und der dreieckigen Geometrie ein Strömungsabriss erfolgt. Der damit erzeugte Strömungsabriss erfolgt somit vollständig entlang der gesamten Länge der Verdickung.

Es hat sich für die Optimierung des Auftriebs als besonders vorteilhaft herausgestellt die Geometrie der flügelartigen Form so zu wählen, dass mindestens 50% von der gesamten Spannweite der Form von der Geometrie des allgemeinen Vierecks umfasst sind, wobei die Geometrie sich der Art nach an einer ellipsenförmigen, ahornsamenähnlichen Fläche orientiert. Es hat sich gezeigt, dass der Auftrieb dann am Größten ist, wenn die Seite des Vierecks an der Profilnase länger ist als an der Profilkante. Dies soll deswegen erfolgen, damit sich eine annähernd ahornsamenförmige Geometrie ausbildet. Die Herstellung einer vollständig ahornsamenförmigen Struktur ist jedoch durch die ellipsenartige Rundung schwierig und kostenintensiv, sodass die aerodynamische Struktur eine Geometrie aufweist, die einfacher und kostengünstiger herstellbar ist als die der Natur vollständig nachempfundene Form, wobei die Geometrie so gewählt wird, dass die Vorteile der einfacheren Herstellung der erfindungsgemäßen Form mit den Vorteilen der Form aus der Natur kombiniert werden.

So ist in einer weiteren vorteilhaften Ausgestaltung vorgesehen, dass die Geometrie der Form eines allgemeinen Vierecks durch eine trapezförmige Geometrie ersetzt ist. Der Vorteil der trapezförmigen Ausgestaltung eines Teils der gesamten Spannweite der Form ist, dass eine parallele Anordnung zweier Seiten eine einfachere Herstellung der erfindungsgemäßen Form gewährleistet wird. Dabei soll das Verhältnis der kurzen Seite der trapezförmigen Geometrie gegenüber der langen Seite einen Wert von 2:3 betragen.

Ferner hat es sich als besonders vorteilhaft herausgestellt, dass sich die Winkel der flügelartigen Form in Bezug auf die Rotationsachse und/oder der Windrichtung in Abhängigkeit von der Windgeschwindigkeit ändern können. Eine solche Ausrichtung hat insbesondere zu Beginn des Betriebs einer Anlage zu erfolgen, da sich die Form so in die Richtung der Luft- und/oder Gasströmung auszurichten hat, dass ein Strömungsabriss an der Verdickung an der dem Wind oder Gasmischung zugewandten Kante der Form erfolgt. Je nachdem wie groß die Strömungsenergie ist, muss sich die Form so ausrichten, dass der durch den induzierten Strömungsabriss erzielte Drehmoment zu Beginn des Betriebs der Anlage nicht zu groß ist, um ein Taumeln des Rotors zu vermeiden. Die Form wird dabei langsam in den Gasstrom gedreht. Dies erfolgt analog dem Pitch Control Prinzip aus den bekannten Rotorblättern nach dem Stand der Technik.

Die Kompatibilität der erfindungsgemäßen Form zu den Formen nach dem Stand der wird durch flächige Aufnahmen an der Nabe als Rotor- oder Turbinenblatt gewährleistet. Flächige Aufnahme bedeutet in diesem Zusammenhang eine Befestigungsmöglichkeit beispielsweise über Flansche mit Schrauben der Rotorblätter an der Nabe der Konstruktion gewährleistet wird.

Da auf die Form strömungsabhängig starke Kräfte einwirken können, muss die ebene Fläche, die sich von der Wurzel der flügelartigen Form bis zur Spitze aufspannt, elastisch ausgestaltet sein. Unter Elastizität ist vorliegend gemeint, dass die Fläche unter Krafteinwirkung ihre Form zwar verändert, aber bei Wegfall der einwirkenden Kraft in ihre Ursprungsform zurückkehrt. Dies ist insbesondere wichtig, damit sich die Rotorblätter zwar biegen können, aber den auftreffenden Kräften so nachgeben, dass ein Wirbel oder eine wirbelartige Gas- oder Luftbewegung auf der Form, insbesondere auf der ebenen Fläche auch bei hohen einwirkenden Kräften während des gesamten Betriebs gewährleistet bleibt.

Die ebene Fläche ist an der Profilnase der Form so befestigt, dass diese zumindest mit einem Teilbereich kraftschlüssig und/oder formschlüssig verbunden ist. Unter Kraft- und/oder Formschluss ist zu verstehen, dass die ebene Fläche im Bereich der Verdickung befestigt ist, sei es, dass sie verklemmt, verklebt, verschraubt, nach dem Nut/Feder-Prinzip befestigt oder mit Hilfe von Splinten gehalten wird.

Das Material der ebenen Fläche und/oder der Form, sowie der gesamten Struktur im Allgemeinen umfasst dabei Kunststoffe, Metalle, Holz oder Verbundstoffe, sowie Mischungen dieser Stoffe. Unter Kunststoffen sind alle plastisch verformbaren Materialien, wie PE, PVC, PEEK etc. oder auch Karbonfasern zu verstehen. Metalle umfassen Verbindungen von Eisen, Chrom, Nickel, Mangan, Aluminium, Legierungen wie Messing, Bronze etc. Holz umfasst Hölzer wie Ahorn, Pappel, Fichte, Buche oder auch Verbundstoffe wie kohlefaserverstärkte Materialverbünde, insbesondere solche die aus sogenannten Pre-Prags hergestellt sind. Alle voran stehenden Verbindungen weisen dabei eine Elastizität auf, die eine Auslenkung der ebenen Fläche aufgrund linearer oder nicht-linear elastischer Verformung ermöglichen.

Es hat sich dabei insbesondere herausgestellt, dass die Oberfläche der ebenen Fläche durch Aufrauen oder durch Anordnung von Faserlinien bewirkt, dass die rotations- und windkanteninduzierten Wirbel oder wirbelförmigen Gas- und/oder Luftbewegungen sich besser auf der Oberfläche verteilen können bzw. eine Ausbreitung unterstützen oder eine gleichmäßigere Bewegung und Verteilung der Wirbel ermöglichen. Es ist zu vermuten, dass durch das Aufrauen oder die Anordnung der Faserlinien ein verbesserter Auftrieb gegenüber einer faserlinienfreien Form erreicht wird. Das Verfahren zur Herstellung umfasst dabei insbesondere den Fall, dass mit Hilfe einer Nut-Feder-Verbindung oder mit Hilfe von Splinten die elastische Fläche an dem Bereich der Profilnase befestigt wird.

Die erfindungsgemäße Struktur und das Verfahren zu dessen Herstellung werden insbesondere in Anwendungsgebieten zum Einsatz gebracht, die Windturbinen, Abgasturbolader oder Hubschraubern umfassen. Dabei kann Strömungsenergie in mechanische Energie und/oder mit Hilfe eines Generators in elektrische Energie umgewandelt werden.

Die Erfindung wird anhand der nachfolgenden Figuren nochmals eingehend beschrieben.

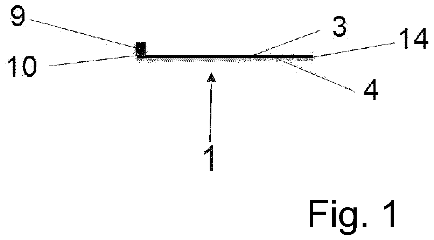

Figur 1 zeigt die aerodynamische Struktur 1 mit Oberseite 3 und Unterseite 4 in einem vertikalen Querschnitt zur Rotationsachse 5. Man erkennt einenends des Querschnitts die Profilnase 10, die eine Verdickung 9 aufweist. Anderenends des Querschnitts ist die Profilhinterkante 14 zu erkennen, die gegenüber der Verdickung 9 an der Profilnase 10 einen geringeren Umfang einnimmt.

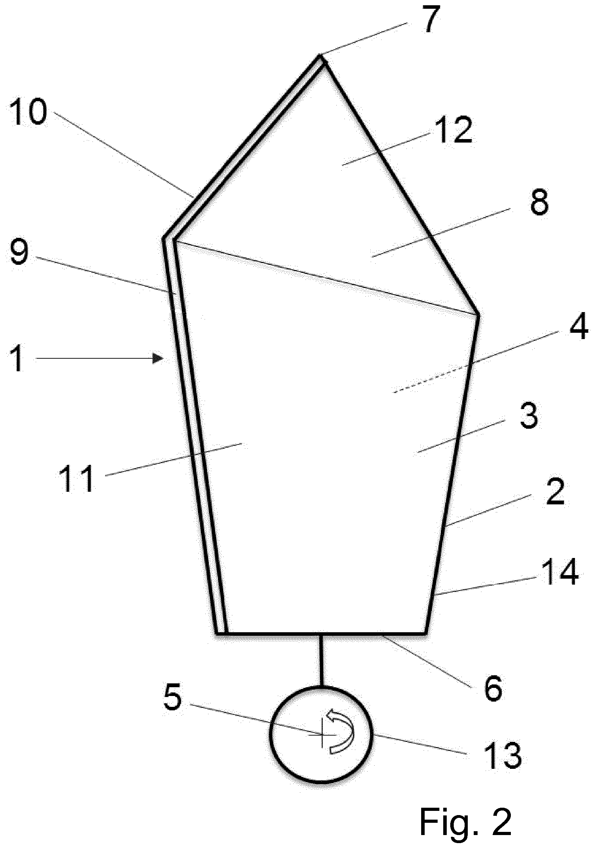

In Figur 2 ist die aerodynamische Struktur 1 in einer perspektivischen Aufsicht dargestellt. Die flügelartige Form 2 der aerodynamischen Struktur 1 weist eine Oberseite 3 und eine Unterseite 4 mit einer Profilnase 10 und einer Verdickung 9 auf, wobei sich die Verdickung 9 an der einem Gas und/oder Wind abgewandten Oberseite 3 befindet. Die flügelartige Form 2 weist eine Geometrie eines allgemeinen Vierecks 11 ausgehend von der Wurzel 6 auf, an die sich eine dreieckige Geometrie 12 an der der Wurzel 6 gegenüberliegenden Seite des allgemeinen Vierecks 11 anschließt und wobei die dreieckige Geometrie 12 in Richtung der Spitze 7 der flügelartigen Form 2 weist. An der dem Wind abgewandten Oberseite 3 der flügelartigen Form 2 ist eine Verdickung 9 angeordnet, die scharfkantig ausgestaltet ist. Der Übergang von der scharfkantigen Verdickung 9 zur Oberseite 3 der ebenen Fläche 8 ist dabei so gewählt wird, dass eine Windkante entsteht. In der vorliegenden Darstellung folgt die Geometrie der Verdickung 9 der gesamten Kontur der dem Wind abgewandten Seite der flügelartigen Form 2, d.h. die Kontur der Verdickung 9 erstreckt sich über die gesamte Spannweite der flügelartigen Form 2. Der damit erzeugbare Strömungsabriss bei einer Rotation erfolgt somit vollständig entlang der gesamten Länge der Verdickung 9 der flügelartigen Form 2. Wird die aerodynamische Struktur 1 durch eine Windbewegung in Rotation um die in einer Aufnahme 13 gelagerten Rationsachse 5 versetzt, so entsteht ein Wirbel oder eine wirbelartige Gas- oder Luftbewegung auf der Oberseite 3 der flügelartigen Form 2, die sich in Richtung der Profilhinterkante 14 bewegt.

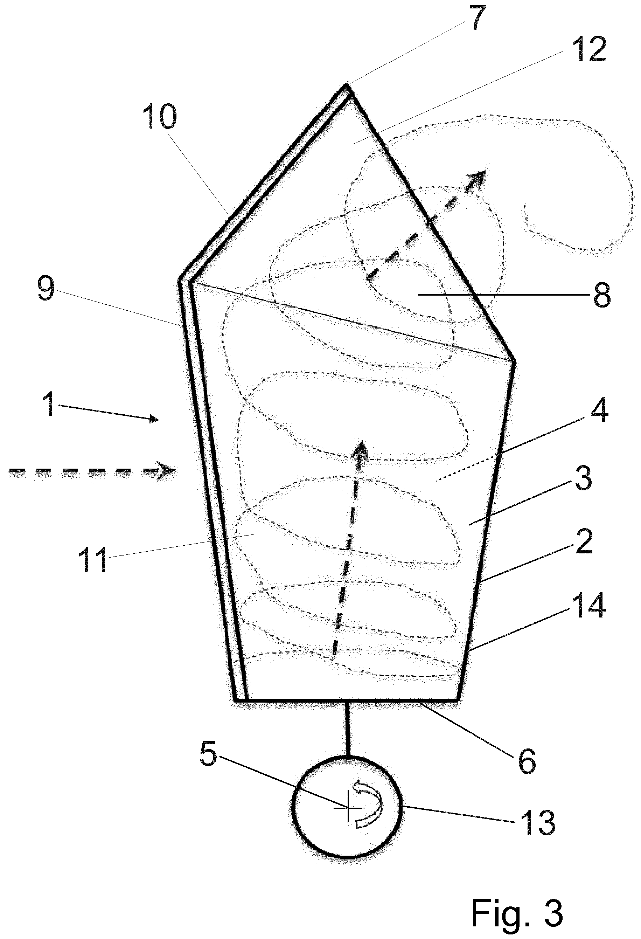

In Figur 3 ist die Bewegung bzw. die Bewegungsrichtung der Wirbel auf der flügelartigen Form 2 der aerodynamischen Struktur 1 dargestellt. Wird die aerodynamische Struktur 1 durch eine Windbewegung in Rotation um die Rotationsachse 5 versetzt, so entsteht ein Wirbel oder eine wirbelartige Gas- oder Luftbewegung auf der Oberseite 3 der ebenen Fläche 8. Der Wirbel breitet sich auf der ebenen Fläche 8 aus und reißt Luft auf der Oberseite 3 der flügelartigen Form 2 mit. Die Wirbel bewegen sich bei der Rotation in Richtung der Profilhinterkante 14 und verlassen die ebene Fläche 8 im Bereich der Profilhinterkante 14 der dreieckigen Struktur 12. Je vollständiger sich der Wirbel oder die wirbelartige Gas- oder Luftbewegung auf der Oberseite 3 der ebenen Fläche 8 ausbreitet, desto mehr wächst der generierte Unterdruck und desto größer wird der erzeugte Auftrieb.

### BEZUGSZEICHENLISTE

- .1: aerodynamische Struktur
- 2: flügelartige Form
- 3: Oberseite
- 4: Unterseite
- 5: Rotationsache
- 6: Wurzel
- 7: Spitze
- 8: Ebene Fläche
- 9: Verdickung
- 10: Profilnase
- 11: Geometrie allgemeines Viereck
- 12: Dreieckige Geometrie
- 13: Aufnahme
- 14: Profilhinterkante

## Patentansprüche

1. Aerodynamische Struktur (1), umfassend mindestens eine flügelartige Form (2) mit Ober- (3) und Unterseite (4), die eine Rotationsachse (5) aufweist, in die ein Lager eingelassen und das über eine Welle mit einer Achse verbunden ist, wobei sich von der Wurzel (6) der flügelartigen Form (2) bis zur Spitze (7) eine ebene Fläche (8) aufspannt und eine Verdickung (9) im Bereich der Profilnase (10) auf der dem Wind abgewandten Oberseite (3) vorhanden ist, wobei die ebene Fläche (8) die Geometrie eines allgemeinen Vierecks (11) von der Wurzel (6) der Form (2) aufweist und an eine der Seiten sich eine dreieckige Geometrie (12) zur Spitze (7) der Form (2) anschließt,
**dadurch gekennzeichnet,**
**dass** sich die Orientierung der Verdickung (9) beim Übergang des allgemeinen Vierecks (11) zur dreieckigen Geometrie (12) ändert und die Verdickung (9) viereckig oder dreieckig und scharfkantig ausgebildet ist.

2. Aerodynamische Struktur (1) nach Anspruch 1,
**dadurch gekennzeichnet, dass** von der gesamten Spannweite der Form (2) die Geometrie des allgemeinen Vierecks (11) mindestens 50% einnimmt.

3. Aerodynamische Struktur (1) nach einem der Ansprüche 1 oder 2,
**dadurch gekennzeichnet, dass** die Verdickung (9) der Geometrie des allgemeinen Vierecks (11) und der dreieckigen Geometrie (12) der gesamten Spannweite der Form (2) in der Kontur folgt.

4. Aerodynamische Struktur (1) nach einem der Ansprüche 1 bis 3,
**dadurch gekennzeichnet, dass** die Geometrie der Form (2) eines allgemeinen Vierecks (11) durch eine trapezförmige Geometrie ersetzt ist.

5. Aerodynamische Struktur (1) nach Anspruch 4,
**dadurch gekennzeichnet, dass** das Verhältnis der kurzen Seite der trapezförmigen Geometrie gegenüber der langen Seite einen Wert von 2:3 aufweist.

6. Aerodynamische Struktur (1) nach einem der Ansprüche 1 bis 5,
**dadurch gekennzeichnet, dass** sich die Winkel der flügelartigen Form (2) in Bezug auf die Rotationsachse (5) und/oder der Richtung der gasförmigen Strömung in Abhängigkeit von der Strömungsgeschwindigkeit ändern.

7. Aerodynamische Struktur (1) nach einem der Ansprüche 1 bis 6,
**dadurch gekennzeichnet, dass** die Form (2) Aufnahmen (13) zur Befestigung als Rotor- oder Turbinenblatt aufweist.

8. Aerodynamische Struktur (1) nach einem der Ansprüche 1 bis 7,
**dadurch gekennzeichnet, dass** die ebene Fläche (8) elastisch ausgestaltet ist.

9. Aerodynamische Struktur (1) nach einem der Ansprüche 1 bis 8,
**dadurch gekennzeichnet, dass** die ebene Fläche (8) zumindest mit einem Teilbereich der Profilnase (10) kraftschlüssig und/oder formschlüssig verbunden ist.

10. Aerodynamische Struktur (1) nach einem der Ansprüche 1 bis 9,
**dadurch gekennzeichnet, dass** das Material für die Form (2) Kunststoffe, Metalle, Holz oder Verbundstoffe umfasst.

11. Aerodynamische Struktur (1) nach einem der Ansprüche 1 bis 10
**dadurch gekennzeichnet, dass** Faserlinien auf der ebenen Fläche (8) vorhanden sind.

12. Verwendung einer aerodynamischen Struktur (1) nach einem der Ansprüche 1 bis 11, als Teil eines Rotors, wobei die Strömungsenergie eines Gasmediums zur Energieerzeugung im nahezu optimalen Bereich des Betz-Koeffizienten genutzt werden kann.

13. Verwendung einer aerodynamischen Struktur (1) nach einem der Ansprüche 1 bis 12, zum Einsatz in Windturbinen, Abgasturboladern oder Hubschraubern.

## Claims

1. Aerodynamic structure (1), comprising at least one wing-like shape (2) with a top (3) and bottom (4), which has an axis of rotation (5), in which a bearing is embedded and which is connected to an axis via a shaft, wherein a flat surface (8) extends from the root (6) of the wing-like shape (2) to the tip (7) and a thickening (9) is present in the region of the profile nose (10) on the upper side (3) facing away from the wind, wherein the flat surface (8) has the geometry of a general quadrilateral (11) from the root (6) of the shape (2) and a triangular geometry (12) adjoins one of the sides to the tip (7) of the shape (2),
**characterised in that**
the orientation of the thickening (9) changes at the transition of the general quadrilateral (11) to the triangular geometry (12) and the thickening (9) is quadrangular or triangular and sharp-edged.

2. Aerodynamic structure (1) according to claim 1,
**characterised in that** the geometry of the general quadrilateral (11) occupies at least 50% of the total span of the shape (2).

3. Aerodynamic structure (1) according to one of claims 1 or 2,
**characterised in that** the thickening (9) follows the geometry of the general quadrilateral (11) and the triangular geometry (12) of the entire span of the shape (2) in the contour.

4. Aerodynamic structure (1) according to any one of claims 1 to 3,
**characterised in that** the geometry of the shape (2) of a general quadrilateral (11) is replaced by a trapezoidal geometry.

5. Aerodynamic structure (1) according to claim 4,
**characterised in that** the ratio of the short side of the trapezoidal geometry to the long side has a value of 2:3.

6. Aerodynamic structure (1) according to any one of claims 1 to 5,
**characterised in that** the angles of the wing-like shape (2) in relation to the axis of rotation (5) and/or the direction of the gaseous flow change as a function of the flow velocity.

7. Aerodynamic structure (1) according to any one of claims 1 to 6,
**characterised in that** the shape (2) has receptacles (13) for attachment as a rotor or turbine blade.

8. Aerodynamic structure (1) according to any one of claims 1 to 7,
**characterised in that** the flat surface (8) is elastic.

9. Aerodynamic structure (1) according to any one of claims 1 to 8,
**characterised in that** the flat surface (8) is connected to at least part of the profile nose (10) in a force-fit and/or form-fit manner.

10. Aerodynamic structure (1) according to any one of claims 1 to 9,
**characterised in that** the material for the shape (2) comprises plastics, metals, wood or composite materials.

11. Aerodynamic structure (1) according to any one of claims 1 to 10
**characterised in that** fibre lines are present on the flat surface (8).

12. Use of an aerodynamic structure (1) according to any one of claims 1 to 11, as part of a rotor, wherein the flow energy of a gas medium can be utilised to generate energy in the near-optimal range of the Betz coefficient.

13. Use of an aerodynamic structure (1) according to any one of claims 1 to 12, for use in wind turbines, exhaust gas turbochargers or helicopters.

## Revendications

1. Structure aérodynamique (1), comprenant au moins une forme en forme d'aile (2) avec une face supérieure (3) et une face inférieure (4), qui présente un axe de rotation (5) dans lequel est encastré un palier et qui est relié à un axe par un arbre, une surface plane (8) s'étendant de la racine (6) de la forme en forme d'aile (2) jusqu'à la pointe (7) et un épaississement (9) étant présent dans la zone du nez profilé (10) sur la face supérieure (3) opposée au vent, la surface plane (8) présentant la géométrie d'un quadrilatère général (11) depuis la racine (6) de la forme (2) et une géométrie triangulaire (12) se raccordant à l'un des côtés vers la pointe (7) de la forme (2),
**caractérisé en ce**
**que** l'orientation de l'épaississement (9) change lors du passage du quadrilatère général (11) à la géométrie triangulaire (12) et l'épaississement (9) est réalisé en forme de quadrilatère ou de triangle et à arêtes vives.

2. Structure aérodynamique (1) selon la revendication 1,
**caractérisé en ce que**, sur la longueur totale de la portée de la forme (2), la géométrie du quadrilatère général (11) occupe au moins 50%.

3. Structure aérodynamique (1) selon l'une des revendications 1 ou 2, **caractérisé en ce que** l'épaississement (9) de la géométrie du quadrilatère général (11) et de la géométrie triangulaire (12) suit toute la longueur de la portée de la forme (2) dans le contour.

4. Structure aérodynamique (1) selon l'une quelconque des revendications 1 à 3,
**caractérisé en ce que** la géométrie de la forme (2) en quadrilatère général (11) est remplacée par une géométrie trapézoïdale.

5. Structure aérodynamique (1) selon la revendication 4,
**caractérisé en ce que** le rapport du côté court de la géométrie trapézoïdale par rapport au côté long a une valeur de 2:3.

6. Structure aérodynamique (1) selon l'une quelconque des revendications 1 à 5,
**caractérisé en ce que** les angles de la forme en forme d'aile (2) par rapport à l'axe de rotation (5) et/ou la direction de l'écoulement gazeux varient en fonction de la vitesse d'écoulement.

7. Structure aérodynamique (1) selon l'une quelconque des revendications 1 à 6,
**caractérisé en ce que** la forme (2) présente des logements (13) pour la fixation en tant que pale de rotor ou de turbine.

8. Structure aérodynamique (1) selon l'une quelconque des revendications 1 à 7,
**caractérisé en ce que** la surface plane (8) est conçue de manière élastique.

9. Structure aérodynamique (1) selon l'une quelconque des revendications 1 à 8,
**caractérisé en ce que** la surface plane (8) est reliée au moins à une zone partielle du nez de profil (10) de manière à être solidaire et/ou par complémentarité de forme.

10. Structure aérodynamique (1) selon l'une quelconque des revendications 1 à 9,
**caractérisé en ce que** le matériau pour la forme (2) comprend des matières plastiques, des métaux, du bois ou des matériaux composites.

11. Structure aérodynamique (1) selon l'une quelconque des revendications 1 à 10
**caractérisé en ce que** des lignes de fibres sont présentes sur la surface plane (8).

12. Utilisation d'une structure aérodynamique (1) selon l'une quelconque des revendications 1 à 11, en tant que partie d'un rotor, dans laquelle l'énergie d'écoulement d'un milieu gazeux peut être utilisée pour produire de l'énergie dans la plage presque optimale du coefficient de Betz.

13. Utilisation d'une structure aérodynamique (1) selon l'une des revendications 1 à 12, pour une utilisation dans des turbines éoliennes, des turbocompresseurs à gaz d'échappement ou des hélicoptères.
